# EUROPEAN PATENT APPLICATION

(11) **EP 4 644 201 A1**
(43) Date of publication of application: **05.11.2025**
(21) Application number: 22969519.2
(22) Date of filing: 27.12.2022
(51) Int. Cl.: B60W 30/18

(54) **METHOD AND APPARATUS FOR PREDICTIVELY CONTROLLING AIR COMPRESSOR HAVING ENERGY RECOVERY FUNCTION FOR VEHICLE, ELECTRONIC DEVICE, AND COMPUTER READABLE MEDIUM**

(71) Applicant: ZF Commercial Vehicle Systems (Qingdao) Co., Ltd., Qingdao, Shandong 266510 (CN)
(72) Inventor: LIANG, Zenghe, Shanghai 200233 (CN)
(74) Representative: Bremer, Ulrich
(86) International application number: PCT/CN2022/142319
(87) International publication number: WO 2024/138362

(57) **Abstract**

The present invention relates to a method, an apparatus, and an electronic device for predictively controlling an air compressor of a vehicle having an energy recovery function, and a computer-readable medium. The method includes the following steps: - acquiring electronic horizon data from an ADASIS map to obtain information about a road ahead and predicting a commanded vehicle speed by means of speed planning and control based on predictive economic cruise control (S1); and - adjusting a lower threshold for charging pressure control of an air compressor to a value higher than a default value therefor when the commanded vehicle speed indicates that a vehicle decelerates in gear (S2).

## Description

### Technical Field

The present invention relates to a method for predictively controlling an air compressor of a vehicle having an energy recovery function. Furthermore, the present invention also relates to an apparatus for executing the method.

### Background Art

In the field of motor vehicle technology, the use of air compressors (also known as air compression machines) is known. Air compressors can compress air and, for example, provide compressed air for vehicle braking. In addition, the use of the compressed air allows for cooling of brake drums, preventing brake pads from being burned out due to sudden, intense braking. Furthermore, air compressors also provide pneumatic power for a vehicle's air suspension system, thereby enabling adjustments to the vehicle's height and/or suspension to improve comfort and safety.

An air compressor is directly driven by the engine of a vehicle, where pneumatic power for the air compressor comes from flywheel rotation driven by engine fuel injection, which is a process that consumes vehicle fuel. On the one hand, to save fuel, it is a conventional practice to use an air compressor with a clutch. When no charging is required, the air compressor is disengaged from the engine to reduce no-load consumption of the air compressor. On the other hand, when braking and energy recovery occur, the air compressor is usually under passive control. That is, the air compressor will not be charged until a default charging threshold is reached, and therefore energy cannot be recovered efficiently. In addition, there is no corresponding intervention in gears, and consequently the braking force may not necessarily be recovered by the air compressor through the engine. Furthermore, during vehicle driving, no consideration is given to predicting the engine's operating points to adjust timing of charging and make the air compressor implement charging when the engine operates at a fuel-efficient point. Therefore, it is desirable to be able to reduce engine fuel consumption while ensuring that the air compressor provides sufficient compressed air.

The inventor has found that the prior art has not considered flexible control of an air compressor in vehicle energy recovery scenarios to reduce engine fuel consumption and thereby lower costs while ensuring sufficient compressed air supply.

### Summary of the Invention

To solve the above technical problem, according to one aspect of the present invention, a method for predictively controlling an air compressor of a vehicle having an energy recovery function is provided. The method according to the present invention belongs to a predictive air management (PAM) method.

The main concept of the present invention is as follows: When a commanded vehicle speed indicates that a vehicle decelerates in gear (energy recovery), a lower threshold for charging pressure control of the air compressor is adjusted to a value higher than a default value therefor, thereby enabling the air compressor to do more work without consuming vehicle fuel and to initiate the air compressor's charging and energy storage operations in a more timely manner by utilizing the braking process. In this way, more energy storage and fuel savings as well as reduced environmental pollution are achieved.

The proposed method according to the present invention includes the following steps:
step one: acquiring electronic horizon data from an ADASIS map to obtain information about a road ahead and predicting a commanded vehicle speed by means of speed planning and control based on predictive economic cruise control (S1); and
step two: adjusting a lower threshold for charging pressure control of the air compressor to a value higher than a default value therefor when the commanded vehicle speed indicates that the vehicle decelerates in gear (S2).

In a preferred embodiment, the lower threshold for charging pressure control of the air compressor is adjusted to a value lower than the default value therefor when the commanded vehicle speed does not indicate that the vehicle decelerates in gear and a probability is high that a vehicle engine operating point calculated based on the predicted commanded vehicle speed falls within a high-efficiency zone.

In a preferred embodiment, the lower threshold for charging pressure control of the air compressor is restored to the default value therefor when the commanded vehicle speed does not indicate that the vehicle decelerates in gear and the probability is not high that the vehicle engine operating point calculated based on the predicted commanded vehicle speed falls within the high-efficiency zone.

In short, based on the prediction of the road ahead of the vehicle and the prediction of the engine operating point, if the probability is high that the engine operating point falls within the high-efficiency zone, then it is possible to wait first; as the vehicle moves, if an operating condition of braking to decelerate appears ahead, then the air compressor charging can be activated to fully implement energy recovery while meeting air demand of the vehicle. Even if no operating condition of energy recovery ahead is predicted in a certain period of time, it is easy to initiate air compressor charging while the engine operating point is in the high-efficiency zone. If the probability is not high that the engine operating point falls within the high-efficiency zone, it is not possible to wait too long, and the air compressor charging should be carried out in a timely manner while the engine operating point is in the high-efficiency zone. Thus, in addition to the case of vehicle energy recovery, the method according to the present invention also enables more flexible and appropriate control of the air compressor according to the engine operating conditions in the case of non-energy recovery of the vehicle.

In a preferred embodiment, the information about the road ahead includes grade conditions, and the road ahead may be uphill, downhill, or flat. In addition, the information about the road ahead may further include other conditions about the road.

In a preferred embodiment, the deceleration in gear refers to the vehicle downhill coasting in gear, or the vehicle braking in gear. Particularly, by adjusting the lower threshold for charging pressure control of the air compressor to the value higher than the default value therefor when the vehicle is downhill coasting in gear, it is possible to trigger the charging process of the air compressor in a more timely manner, thereby fully recovering energy and storing sufficient compressed air for subsequent use.

In a preferred embodiment, when the vehicle decelerates in gear, a neutral coasting function of the vehicle is disabled or the vehicle does not possess a neutral coasting function, so as to ensure that no unintentional human operation occurs to cause the vehicle to coast in neutral, preventing the vehicle from carrying out energy recovery.

In a preferred embodiment, the vehicle may be a commercial vehicle or a vehicle for another purpose.

Furthermore, according to another aspect of the present invention, an apparatus for predictively controlling an air compressor of a vehicle having an energy recovery function is provided. The apparatus includes:
- an acquisition and prediction module configured to acquire electronic horizon data from an ADASIS map to obtain information about a road ahead and to predict a commanded vehicle speed by means of speed planning and control based on predictive economic cruise control; and
- an execution module configured to adjust a lower threshold for charging pressure control of the air compressor to a value higher than a default value therefor when the commanded vehicle speed indicates that the vehicle decelerates in gear.

In a preferred embodiment, the execution module is further configured to adjust the lower threshold for charging pressure control of the air compressor to a value lower than the default value therefor when the commanded vehicle speed does not indicate that the vehicle decelerates in gear and a probability is high that a vehicle engine operating point calculated based on the predicted commanded vehicle speed falls within a high-efficiency zone.

In a preferred embodiment, the execution module is further configured to restore the lower threshold for charging pressure control of the air compressor to the default value therefor when the commanded vehicle speed does not indicate that the vehicle decelerates in gear and the probability is not high that the vehicle engine operating point calculated based on the predicted commanded vehicle speed falls within the high-efficiency zone.

In a preferred embodiment, the information about the road ahead includes grade conditions, and the road ahead may be uphill, downhill, or flat.

In a preferred embodiment, the deceleration in gear refers to the vehicle downhill coasting in gear, or the vehicle braking in gear.

In a preferred embodiment, when the vehicle decelerates in gear, a neutral coasting function of the vehicle is disabled or the vehicle does not possess a neutral coasting function.

In a preferred embodiment, the vehicle may be a commercial vehicle or a vehicle for another purpose.

According to another aspect of the present invention, an electronic device for predictively controlling an air compressor of a vehicle having an energy recovery function is provided. The electronic device includes:
one or more processors; and
a storage means configured to store one or more programs.

The one or more programs, when executed by the one or more processors, cause the one or more processors to implement the method for predictively controlling an air compressor of a vehicle having an energy recovery function according to the present invention.

According to yet another aspect of embodiments of the present invention, a computer-readable medium having a computer program stored thereon is provided. The program, when executed by a processor, causes the method for predictively controlling an air compressor of a vehicle having an energy recovery function according to the present invention to be implemented.

The advantages or beneficial effects described in the aspect of the method for predictively controlling an air compressor of a vehicle having an energy recovery function according to the present invention equally apply to the apparatus and the electronic device for predictively controlling an air compressor of a vehicle having an energy recovery function according to the present invention and to the computer-readable medium according to the present invention.

Further effects of the above non-conventional optional methods will be described below in conjunction with specific implementations.

### Brief Description of the Drawings

The drawings are used to better understand the present invention, but do not constitute an improper limitation to the present invention. In the drawings:
FIG. 1 is a flowchart of a method according to an embodiment of the present invention;
FIG. 2 is a schematic diagram of an apparatus according to an embodiment of the present invention;
FIG. 3 is a diagram of a relationship between an apparatus according to an embodiment of the present invention and other related apparatuses;
FIG. 4 is a schematic structural diagram of a computer system suitable for implementing a terminal device or a server according to an embodiment of the present invention; and
FIG. 5 shows bar charts of travel time and engine fuel consumption of a vehicle with and without the use of a method according to the present invention.

### Detailed Description of Embodiments

Exemplary embodiments of the present invention are described below with reference to the drawings. Various details of the embodiments of the present invention are included to facilitate understanding and should be considered exemplary only. Accordingly, it should be appreciated by those of ordinary skill in the art that various changes and modifications can be made to the embodiments described herein without departing from the scope and spirit of the present invention.

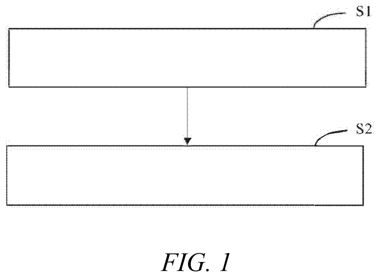

FIG. 1 is a flowchart of a method according to an embodiment of the present invention. The method includes step S1 and step S2.

Step S1: Acquire electronic horizon data from an ADASIS map to obtain information about a road ahead and predict a commanded vehicle speed by means of speed planning and control based on predictive economic cruise control.

Step S2: Adjust a lower threshold for charging pressure control of an air compressor to a value higher than a default value therefor when the commanded vehicle speed indicates deceleration in gear.

The method steps in the proposed method of the present invention will be set forth in detail.

The European automotive industry has proposed the ADASIS standard, intended to standardize extracted map logical data structures and communication transmission protocols. The full name of ADASIS is Advanced Driver Assistance Systems Interface Specifications, which is a data communication protocol proposed by the ADASIS association for implementing the electronic horizon. An ADASIS map refers to map data provided to vehicles based on the ADASIS standard.

Electronic horizon is also referred to as electronic map reconstruction. Electronic horizon is a product or service that provides vehicles with beyond-line-of-sight road traffic information, such as road information (e.g., curvature, grade) and traffic light information (e.g., position, outline), etc. beyond the sensing range of sensors. The electronic horizon does not pay attention to all global road traffic information, but only provides road traffic information that is relevant to the road on which the vehicle is traveling and that may affect the vehicle traveling.

The core idea of the electronic horizon is to collect and obtain road traffic information ahead of or around the vehicle. The most direct carrier of this information is a map (here, the road traffic information primarily refers to static information such as the aforementioned road curvature and lane marking shape; it may also be possible to provide road traffic information, particularly real-time dynamic information, through V2X). Therefore, the electronic horizon often uses maps as its data foundation. On the basis of map data, as well as the current position of the vehicle, the road on which the vehicle is currently traveling, connected roads, etc. are extracted. In fact, the electronic horizon can be understood as a specific map engine or map API, which obtains specific roads and attributes from map data, then outputs them to the application side.

Vehicles, particularly commercial vehicles, are capable of obtaining electronic horizon data from ADASIS maps in manners known to date.

Predictive economic cruise control (PECC) is an advanced cruise control that coordinates and controls the engine and transmission based on information about the road ahead to finally control speed. It enables effective energy conservation and emission reduction. Predictive economic cruise control is mainly characterized by: locating the vehicle via GPS and simultaneously providing the vehicle with real-time information including grade about the road ahead through electronic horizon data. Subsequently, predictive economic cruise control combines current satellite positioning information regarding the precise location of the vehicle and road information, and computes an "electronic vision" model, such that the travel of the vehicle automatically adapts to this model. The vehicle automatically controls the matching between the engine and the transmission, dynamically adjusts the vehicle speed according to information about the road ahead, thus optimizing engine efficiency and transmission gear control, avoiding unnecessary energy loss, and then achieving energy conservation and emission reduction effects. Specifically, predictive economic cruise control automatically takes over control of the engine and the transmission, for example, by accelerating in advance before uphill and decelerating in advance before downhill, that is, continuously providing predictive commanded vehicle speeds. Therefore, the entire process can be automatically recognized without requiring driver operation. When the commanded vehicle speed provided by the predictive economic cruise control indicates deceleration in gear, the vehicle will perform energy recovery.

Energy recovery in the vehicle is equivalent to the vehicle decelerating in gear. The vehicle decelerating in gear includes two cases: the vehicle downhill coasting in gear; and the vehicle braking in gear.

In the present invention, when the vehicle performs energy recovery, that is, when the commanded vehicle speed predicted by the speed planning and control based on predictive economic cruise control indicates deceleration in gear, the lower threshold for charging pressure control of the air compressor is adjusted to the value higher than the default value therefor. This enables the charging process of the air compressor to be triggered in a more timely manner without consuming vehicle fuel, and the air compressor to do more work and thereby store higher-pressure air. In this way, more energy storage and fuel savings as well as reduced environmental pollution are achieved. Here, the lower threshold for charging pressure control of the air compressor is a parameter for controlling whether the air compressor does work. For this parameter, a default value is usually set. When the lower threshold for charging pressure control of the air compressor is adjusted to a value higher than the default value therefor, it means that the air compressor is to do more work. Conversely, when the lower threshold for charging pressure control of the air compressor is adjusted to a value lower than the default value therefor, it means that the air compressor is prevented or even prohibited from doing work. In addition, it should be noted that the energy recovery mentioned in the present invention refers to direct conversion from mechanical energy into pneumatic energy, which is specifically as follows: When the vehicle decelerates in gear, the tires drives the vehicle propeller shaft and the mechanical energy of the vehicle is transmitted to the output shaft of the engine through the transmission and the clutch, thereby causing rotation of the flywheel. The motion of the flywheel is transmitted to the input shaft of the air compressor, thereby compressing air and finally accomplishing the energy conversion.

Furthermore, in a case where the vehicle engine drives the air compressor to do work for air compression, the predicted speed of the engine is calculated, by using a method known in the art, from the commanded vehicle speed predicted by the speed planning and control based on predictive economic cruise control, and then the predicted torque is estimated. Then, based on the obtained predicted speed and corresponding predicted torque, engine operating points are found. An optimal operating point and a high-efficiency zone of the engine are known and can be determined by reference to a test curve graph of brake-specific fuel consumption (BSFC) of the engine. The optimal operating point represents the most economical operating point of the vehicle engine in terms of fuel consumption, and the high-efficiency zone is defined as follows: under the same engine speed, a bandwidth is set upward and downward from a torque value corresponding to the highest fuel efficiency, and a torque range covered by the bandwidth is the high-efficiency zone. The bandwidth has different calibration thresholds depending on different engines. If there is a high probability that the found engine operating points fall within the high-efficiency zone, the lower threshold for charging pressure control of the air compressor is adjusted to a value lower than the default value therefor. Here, a probability threshold may be set. For example, the vehicle engine drives the air compressor to do work for air compression on a road segment, and the predictive economic cruise control predicts ten engine operating points based on road information of the road segment as the vehicle travels on the road segment, with eight of the engine operating points falling within the high-efficiency zone, where the probability threshold is pre-set to 0.6. It can be seen that the probability of the engine operating points falling within the high-efficiency zone on the road segment is 0.8, which is greater than 0.6. In other words, the probability is high, and thus the lower threshold for charging pressure control of the air compressor is adjusted to a value lower than the default value therefor. If the vehicle engine continues to drive the air compressor for air compression on a next road segment, and the predictive economic cruise control also predicts ten engine operating points based on road information of the road segment as the vehicle travels on the road segment, for example, but with only two of the engine operating points falling within the high-efficiency zone, where the probability threshold is still, for example, 0.6. It can be seen that the probability of the engine operating point falling within the high-efficiency zone on the road segment is 0.2, which is lower than 0.6. In other words, the probability is not high, and thus the lower threshold for charging pressure control of the air compressor is restored to the default value therefor.

The road information includes grade conditions, and the grade conditions actually belong to longitudinal profile conditions of the road. The longitudinal profile conditions of the road refer to a vertical section cut longitudinally along the road centerline. It depicts the undulating variations along the road. The longitudinal profile design of the road is mainly based on the nature and grade of the road, the type and driving performance of vehicles, and the topographic conditions along the road. Local climatic, hydrological, and soil conditions, as well as drainage requirements, specifically determine the magnitude of longitudinal grades and the elevation of each point. In the present invention, the road ahead may be uphill, downhill, or flat. A flat road is a road with zero or approximately zero grade that is neither uphill nor downhill.

A dynamic flat slope value may be set as a threshold for determining whether the road is downhill. When the threshold is exceeded, it is determined that the vehicle is in a downhill state. It should be noted here that in the case that the downhill grade does not exceed the dynamic flat slope value, even if the vehicle is in the downhill state, the road is not determined as downhill because the grade is too small.

When the commanded vehicle speed predicted by the speed planning and control based on predictive economic cruise control indicates deceleration in gear, that is, when the vehicle is to perform energy recovery, a neutral coasting function of the vehicle should be disabled. This is because, although neutral coasting can also save fuel, due to the clutch being in a disengaged state, the mechanical energy of the vehicle cannot be transmitted to the output shaft of the engine to drive the flywheel motion. Therefore, the air compressor cannot be driven to do work to compress air; that is, energy recovery cannot occur. In addition, it is also possible that the vehicle itself does not possess a neutral coasting function.

According to the present invention, it can also be stipulated that when the air pressure provided by the air compressor is sufficient for the use by the vehicle, an outlet port of the air compressor is connected to an inlet port thereof so that there is no pressure difference between the outlet port and the inlet port. In this way, the air compressor does not compress air and only overcomes rotational friction, thereby avoiding the air compressor charging air and simultaneously discharging air due to high-pressure protection. This can avoid energy waste. For this purpose, an air compressor with a clutch can be used. When no air compression by the air compressor is required, the clutch can be made into a disengaged state, and only when air compression by the air compressor is required, the clutch is made into an engaged state.

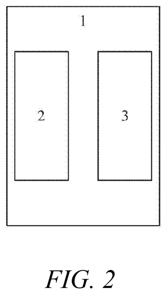

FIG. 2 is a schematic diagram of an apparatus according to an embodiment of the present invention.

It can be seen that an apparatus 1 for predictively controlling an air compressor of a vehicle having an energy recovery function includes an acquisition and prediction module 2 and an execution module 3.

The acquisition and prediction module 2 is configured to acquire electronic horizon data from an ADASIS map to obtain information about a road ahead and to predict a commanded vehicle speed by means of speed planning and control based on predictive economic cruise control. The execution module 3 is configured to adjust a lower threshold for charging pressure control of the air compressor to a value higher than a default value therefor when the commanded vehicle speed indicates that the vehicle decelerates in gear.

Furthermore, the execution module 3 may be further configured to adjust the lower threshold for charging pressure control of the air compressor to a value lower than the default value therefor when the commanded vehicle speed does not indicate that the vehicle decelerates in gear and a probability is high that a vehicle engine operating point calculated based on the predicted commanded vehicle speed falls within a high-efficiency zone.

Furthermore, the execution module 3 may be further configured to restore the lower threshold for charging pressure control of the air compressor to the default value therefor when the commanded vehicle speed does not indicate that the vehicle decelerates in gear and the probability is not high that the vehicle engine operating point calculated based on the predicted commanded vehicle speed falls within the high-efficiency zone.

In addition, other preferred embodiments described above for the method of the present invention equally apply to the apparatus according to the present invention.

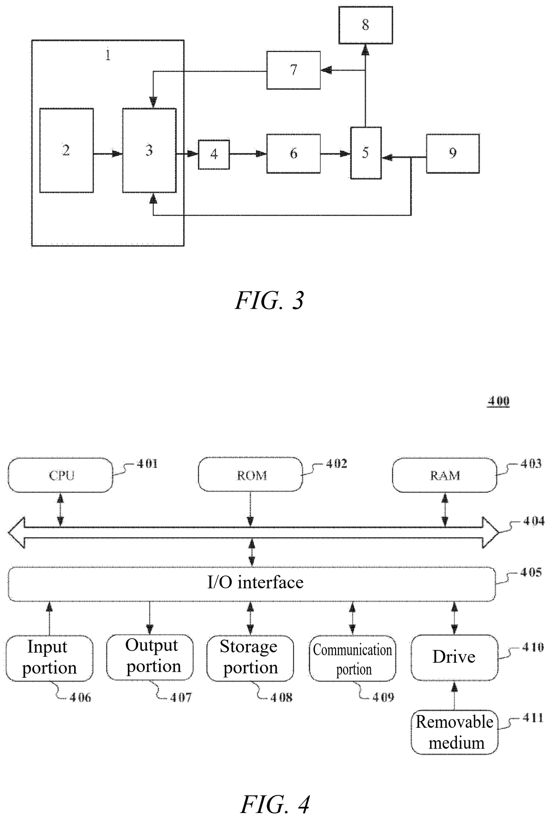

FIG. 3 is a diagram of a relationship between an apparatus according to an embodiment of the present invention and other related apparatuses.

An electrified air processing unit 4 converts a control request received from the execution module 3 into a CAN message signal, which is processed via a gateway 6 and then transmitted to an electronically controlled air processing unit (EC-APU) 5 to adjust an air compressor 9.

The gateway 6 is configured to amplify the CAN message signal output by the electrified air processing unit 4 into a solenoid valve control digital signal, such that the electronically controlled air processing unit 5 utilizes the solenoid valve control digital signal to adjust the air compressor 9.

When the air compressor 9 is controlled by the electronically controlled air processing unit 5, compressed air from the air compressor 9 first passes through a drying tank, and then through a central air valve via an air path to enter an air reservoir 8, wherein the drying tank may be integrated into the electronically controlled air processing unit 5.

A central body control unit (CBCU) 7 acquires a pressure value at the outlet of the air reservoir from a sensor arranged at the air reservoir 8, converts the pressure value into a pressure signal, and feeds back the pressure signal to the execution module 3. This feedback is used to evaluate whether the compressed air currently provided by the air reservoir 8 is sufficient for the use by the vehicle, so as to prevent the air compressor 9 from doing work when the currently provided compressed air is sufficient for the use by the vehicle, thereby avoiding energy waste.

A feedback from an output of the air compressor 9 to the execution module 3 serves to provide the current lower threshold for charging pressure control of the air compressor, such that the execution module 3 adjusts the lower threshold for charging pressure control of the air compressor according to different conditions.

The apparatuses described above communicate with each other via a CAN connection.

Reference is now made to FIG. 4, which is a schematic structural diagram of a computer system 400 suitable for implementing a terminal device according to an embodiment of the present invention. The terminal device shown in FIG. 4 is merely an example and should not impose any limitations on the function or use scope of embodiments of the present invention.

As shown in FIG. 4, the computer system 400 includes a central processing unit (CPU) 401, which may execute various appropriate actions and processes according to a program stored in a read-only memory (ROM) 402 or a program loaded from a storage portion 408 into a random-access memory (RAM) 403. Various programs and data required for the operations of the system 400 are also stored in the RAM 403. The CPU 401, ROM 402, and RAM 403 are interconnected via a bus 404. An input/output (I/O) interface 405 is also connected to the bus 404.

The following components are connected to the I/O interface 405: an input portion 406 including a keyboard, a mouse, etc.; an output portion 407 including, such as, a cathode ray tube (CRT), a liquid crystal display (LCD), etc., and a speaker, etc.; a storage portion 408 including a hard disk, etc.; and a communication portion 409 including a network interface card such as a LAN card, a modem, etc. The communication portion 409 performs communication processing via a network such as the Internet. A drive 410 is also connected to the I/O interface 405 as required. A removable medium 411, such as a magnetic disk, optical disc, magneto-optical disc, semiconductor memory, etc., is mounted on the drive 410 as required, so that computer programs read therefrom can be installed into the storage portion 408 as required.

Particularly, according to the embodiments disclosed in the present invention, the processes described above with reference to the flowchart may be implemented as a computer software program. For example, embodiments disclosed in the present invention include a computer program product including a computer program carried on a computer-readable medium, the computer program containing program code for executing the method illustrated in the flowchart. In such embodiments, the computer program may be downloaded and installed via the communication portion 409 from a network, and/or installed from the removable medium 411. The computer program, when executed by the central processing unit (CPU) 401, causes the above-described functions defined in the system of the present invention to be performed.

It should be noted that the computer-readable medium shown in the present invention may be a computer-readable signal medium or a computer-readable storage medium or any combination of the two. The computer-readable storage medium may be, for example, but is not limited to, electric, magnetic, optical, electromagnetic, infrared, or semiconductor systems, apparatuses, or devices, or any combination thereof. A more specific example of the computer-readable storage medium includes, but is not limited to: an electrical connection having one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present invention, the computer-readable storage medium may be any tangible medium containing or storing a program which may be used by or in combination with an instruction execution system, apparatus or device. In the present invention, the computer-readable signal medium may include data signals in a baseband or propagated as parts of carriers, in which computer-readable program codes are carried. The propagated data signal may be in various forms, including but not limited to an electromagnetic signal, an optical signal, or any suitable combination thereof. The computer-readable signal medium may also be any computer-readable medium beyond the computer-readable storage medium. The computer-readable medium is capable of sending, propagating or transmitting a program used by or in combination with an instruction execution system, apparatus or device or a combination. The program code contained on the computer-readable medium may be transmitted using any appropriate medium, including but not limited to: wireless, electric wire, optical cable, RF, etc., or any suitable combination thereof.

The flowchart and block diagrams in the drawings illustrate possible architectures, functions, and operations of the system, the method, and the computer program product according to various embodiments of the present invention. In this regard, each block in the flowchart or the block diagram may represent a module, a program segment, or a portion of code, and the module, the program segment, or the portion of code described above includes one or more executable instructions for implementing specified logical functions. It should also be noted that, in some alternative implementations, the functions noted in the blocks may occur in an order different from that noted in the drawings. For example, two blocks shown consecutively may in fact be executed substantially concurrently, or may sometimes be executed in reverse order, depending on the function involved. It should further be noted that each block in the block diagrams or the flowchart, and combinations of blocks in the block diagrams or the flowchart, may be implemented by dedicated hardware-based systems that perform specified functions or operations, or by combinations of dedicated hardware and computer instructions.

The modules described in the embodiments of the present invention may be implemented by software or by hardware. The described modules may also be implemented in a processor. For example, it may be described as: a processor including an acquisition and prediction module and an execution module. Herein, the names of these modules do not constitute a limitation to the modules themselves under certain circumstances. For example, the acquisition and prediction module may also be described as "a module for acquiring data and predicting a commanded vehicle speed".

As another aspect, the present invention further provides a computer-readable medium, which may be included in the device described in the above embodiments; or may exist separately without being assembled into the device. The computer-readable medium described above carries one or more programs, and when executed by the device, the one or more programs cause the device to include: acquiring electronic horizon data from an ADASIS map to obtain information about a road ahead and predicting a commanded vehicle speed by means of speed planning and control based on predictive economic cruise control; and adjusting a lower threshold for charging pressure control of the air compressor to a value higher than a default value therefor when the commanded vehicle speed indicates that the vehicle decelerates in gear.

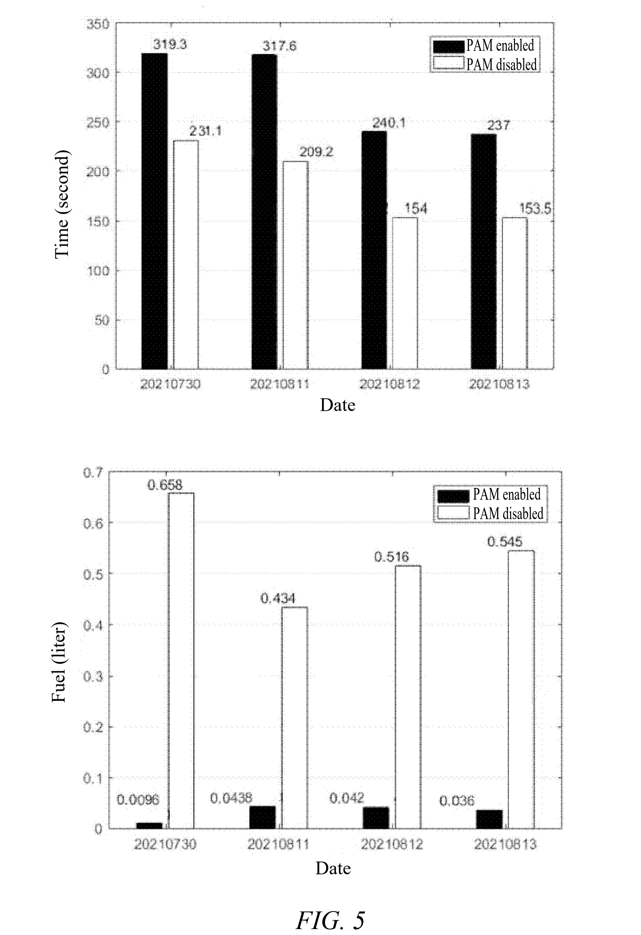

FIG. 5 shows bar charts of travel time and engine fuel consumption of a vehicle with and without the use of a method according to the present invention. The upper part of FIG. 5 plots vehicle travel times (vertical axis) on different dates with and without the use of the method according to the present invention, while the lower part of FIG. 5 plots engine fuel consumption (vertical axis) on different dates with and without the use of the method according to the present invention. The black columns indicate that the vehicle enabled the method according to the present invention during traveling, while the white columns indicate that the vehicle did not enable the method according to the present invention during traveling. It should be noted that the road traveled was Jinan-Laiwu Highway No. 2, and the same vehicle was used. For example, from the data of July 30, 2021, it can be seen that when the vehicle enabled the method according to the present invention during traveling, although the travel time was longer (319.3>231.1), the engine fuel consumption was significantly reduced (0.0096<0.658), compared with when the vehicle did not enable the method according to the present invention during traveling.

The specific implementations described above do not constitute a limitation to the scope of the present invention. It should be appreciated by those skilled in the art that various modifications, combinations, sub-combinations and substitutions may be made depending on design requirements and other factors. Any modifications, equivalent substitutions, improvements, etc. made within the spirit and principles of the present invention shall be included within the scope of protection of the present invention.

## Claims

1. A method for predictively controlling an air compressor of a vehicle having an energy recovery function, **characterized by** comprising:
step one: acquiring electronic horizon data from an ADASIS map to obtain information about a road ahead and predicting a commanded vehicle speed by means of speed planning and control based on predictive economic cruise control; and
step two: adjusting a lower threshold for charging pressure control of the air compressor to a value higher than a default value therefor when the commanded vehicle speed indicates that the vehicle decelerates in gear.

2. The method according to claim 1, **characterized in that** the lower threshold for charging pressure control of the air compressor is adjusted to a value lower than the default value therefor when the commanded vehicle speed does not indicate that the vehicle decelerates in gear and a probability is high that a vehicle engine operating point calculated based on the predicted commanded vehicle speed falls within a high-efficiency zone.

3. The method according to claim 2, **characterized in that** the lower threshold for charging pressure control of the air compressor is restored to the default value therefor when the commanded vehicle speed does not indicate that the vehicle decelerates in gear and the probability is not high that the vehicle engine operating point calculated based on the predicted commanded vehicle speed falls within the high-efficiency zone.

4. The method according to any one of claims 1 to 3, **characterized in that** the information about the road ahead comprises grade conditions.

5. The method according to any one of claims 1 to 3, **characterized in that** the deceleration in gear refers to the vehicle downhill coasting in gear or the vehicle braking in gear.

6. The method according to any one of claims 1 to 3, **characterized in that** a neutral coasting function of the vehicle is disabled or the vehicle does not possess a neutral coasting function.

7. The method according to any one of claims 1 to 3, **characterized in that** the vehicle is a commercial vehicle.

8. An apparatus for predictively controlling an air compressor of a vehicle having an energy recovery function, **characterized by** comprising:
- an acquisition and prediction module configured to acquire electronic horizon data from an ADASIS map to obtain information about a road ahead and to predict a commanded vehicle speed by means of speed planning and control based on predictive economic cruise control; and
- an execution module configured to adjust a lower threshold for charging pressure control of the air compressor to a value higher than a default value therefor when the commanded vehicle speed indicates that the vehicle decelerates in gear.

9. The apparatus according to claim 8, **characterized in that** the execution module is further configured to adjust the lower threshold for charging pressure control of the air compressor to a value lower than the default value therefor when the commanded vehicle speed does not indicate that the vehicle decelerates in gear and a probability is high that a vehicle engine operating point calculated based on the predicted commanded vehicle speed falls within a high-efficiency zone.

10. The apparatus according to claim 9, **characterized in that** the execution module is further configured to restore the lower threshold for charging pressure control of the air compressor to the default value therefor when the commanded vehicle speed does not indicate that the vehicle decelerates in gear and the probability is not high that the vehicle engine operating point calculated based on the predicted commanded vehicle speed falls within the high-efficiency zone.

11. The apparatus according to any one of claims 8 to 10, **characterized in that** the information about the road ahead comprises grade conditions.

12. The apparatus according to any one of claims 8 to 10, **characterized in that** the deceleration in gear refers to the vehicle downhill coasting in gear, or the vehicle braking in gear.

13. The apparatus according to any one of claims 8 to 10, **characterized in that** a neutral coasting function of the vehicle is disabled or the vehicle does not possess a neutral coasting function.

14. The apparatus according to any one of claims 8 to 10, **characterized in that** the vehicle is a commercial vehicle.

15. An electronic device for predictively controlling an air compressor of a vehicle having an energy recovery function, **characterized by** comprising:
one or more processors; and
a storage means configured to store one or more programs, wherein
the one or more programs, when executed by the one or more processors, cause the one or more processors to implement the method according to any one of claims 1 to 7.

16. A computer-readable medium having a computer program stored thereon, **characterized in that** the program, when executed by a processor, causes the method according to any one of claims 1 to 7 to be implemented.
